# EUROPEAN PATENT APPLICATION

(11) **EP 1 229 422 A1**
(43) Date of publication of application: **07.08.2002**
(21) Application number: 01410014.3
(22) Date of filing: 01.02.2001
(51) Int. Cl.: G06F 1/00, G09G 3/36

(54) **Protection of confidential information displayed on a screen**

(71) Applicant: Hewlett-Packard Company, A Delaware Corporation, Palo Alto, CA 94304 (US)
(72) Inventor: Brouhon, Patrick, 38410 Saint Martin d'Uriage (FR)
(74) Representative: Lloyd, Richard Graham

(57) **Abstract**

A device for displaying information while ensuring privacy of the user viewing said information comprises a display (10) and a viewing device (12). The display (10) displays images, each image containing actual data or garbage data. The viewing device is a pair of glasses having each a liquid crystal cell as a glass; the LC cells are synchronised with the display, and are blocked when garbage data is displayed on the display.

Display of garbage data makes it impossible for a third party to see the actual information displayed on the display, whereas the user wearing the viewing device is not prevented from seeing the actual data.

## Description

The present invention relates to devices for data display, and more specifically to a display device that is arranged to protect the privacy of user data being displayed.

Display devices are provided in many information appliances, such as portable/laptop PCs, and public PC appliances placed in kiosks, Internet Cafes, hotel reception areas or the like. Increasingly, users of such appliances, need to be able to view the display or the screen of the display in public places (trade shows, stations, airports, lounges, planes, etc...) without risking being overlooked by outsiders eyes. Often the information on the display is of the most private nature (confidential presentations, e-mail, etc...) and just a glimpse can reveal important company data.

Conventional computer display screens have generally been designed to have the widest possible viewing angle. In fact, achieving this has been a problem in the development of flat Liquid Crystal Displays and technology has been needed to offer a comfortable view whatever the position. Also, the brightness and contrast of such displayed have been greatly improved. This quest for readability also increases the risk for "dishonest" over-looking, since it makes the displayed information visible not only to the user sitting in front of the display screen, but to third parties standing behind or beside the user.

This invention is directed to the provision of a display system for presenting information that is readable only by the user of the display.

In one embodiment of the invention, there is provided in conjunction with a display, a viewing device synchronised with the display. Information for the user of the display is displayed together with garbage data, in separate time frames; the viewing device filters out garbage data : thus, the legitimate user of the display sees the information; however, a third party not provided with the filtering device sees the combination of the garbage data with the information. Garbage data is selected and displayed to make the information unreadable.

Specifically, there is provided a display system comprising:
- a display device for displaying images in response to a signal;
- means to generate a signal for transmission to the display, the signal being such as to cause the display device to display a sequence of images comprising actual data and garbage data; and
- a viewer in the optical path between the display device and the eyes of one or more users.
The viewer includes a dynamic filter synchronised with the signal so as to optically filter out the garbage data from the displayed image. Thus, the actual data is only visible to said users, and third parties not using the viewer cannot discern the actual data.

In this case, an image may comprises only actual data or only garbage data; the viewer is then blocked when an image comprising garbage data is displayed. An image may also comprise actual data and garbage data: the viewer then transmits actual data and blocks garbage data.

In another embodiment of the invention, the display has a reduced vision angle; the vision angle is dynamically controlled according to the position of the legitimate user, so as to allow the user only to see the information. Third parties are simply be out of the viewing angle - the display being hidden by the legitimate user; thus they may not see the displayed information.

Specifically, there is provided a device comprising a display having a dynamically steerable vision angle; and a sensor sensing a position of a user in front of the display, the vision angle being steered according to the position of the user. An angle of vision between 8 and 20° is adapted; the sensor may sense the position of the eyes of the user, or the position of the head of the user. The horizontal angle of vision may be steerable, where only one angle is steerable.

Several solutions have been proposed for displaying three-dimensional images using viewers synchronised with a display. For computer displays, Elsa (Germany) offers under reference Ecomo 4D a three-dimensional display. In this device, the left and right eyes see completely different images: a "viewing spring" - a second display fixed directly on the LCD screen - directs images to the appropriate eye. An eye tracking system synchronises the prisms with the position of the observer's eyes. The purpose of this system is to offer realistic 3D representation, for high-end applications. EP-A-0 892 563 discloses a stereoscopic television system. A display device alternatively displays an image for the right eye and an image for the left eye at a predetermined frequency. A liquid crystal shutter is disposed in front of the display device, and is operated in synchronism with the image switching of the display device. The displayed image is observed through polarised glasses, having different polarisations for each eye. This systems relies on the different polarisations of the different images by the liquid crystal shutter to display separate images for the left and right eyes.

However, these devices are complex and do not prevent a third party from reading "flat" information presented on a display - that is information that is not three-dimensional information, such as a text. A low-cost solution for displaying three dimensional images is to provide the user with glasses formed of two liquid crystal cells. Images for the left and right eyes are displayed alternatively on the screen, and the cell of the glasses for one eye is blocked while the image for the other eye is displayed on the screen. Interlacing images for the right and left eyes makes it possible to simulate three dimensional display on a screen. An example of this technique is disclosed in EP-A-1 024 425. Again, this device does not prevent a third party from seeing "flat" information displayed on the device.

The invention, together with objects and advantages thereof, may best be understood by reference to the following description of the presently preferred embodiments together with the accompanying drawings. In these drawings :
- figure 1 shows a general view of a device according to a first embodiment of the invention;
- figure 2 shows possible images displayed in the device of figure 1;
- figure 3 shows another example of images displayed in the device of figure 1;
- figure 4 is a general view of a device according to another embodiment of the invention.

In the rest of this specification, the word "display" will be used to designate a device for displaying data or information; this can encompass, for instance CRTs, LCDs, or other types of active or passive screens incorporated in or used with any type of computing device or appliance. The words "actual data" or "information" will be used to designate the data to be displayed on the display that is intended to be read or viewed by a user of the display. The word "user" will be used to designate a person legitimately reading or viewing the information on the display, that is the person to whom the information is directed and the term "third party" to designate any other person. As discussed above, one of the problems of prior art displays is that they make information available not only to the user, but also to third parties.

In a first class of embodiments of the invention, actual data is displayed on the display alternately with garbage data. The alternate display of actual data and garbage data is carried out so as to make the actual data unreadable to third parties. The user is provided with an optical filtering device for filtering out garbage data and reading information. Specifically, actual data and garbage data are included in temporally interlaced frames. Each frame comprises either actual data or garbage data. The filtering device may be glasses synchronised with the display and which shut off when the garbage data is displayed. A user wearing such glasses sees only the actual data. Third parties, not wearing the glasses, see not only the actual data, but also the garbage data, and are prevented from understanding the actual data.

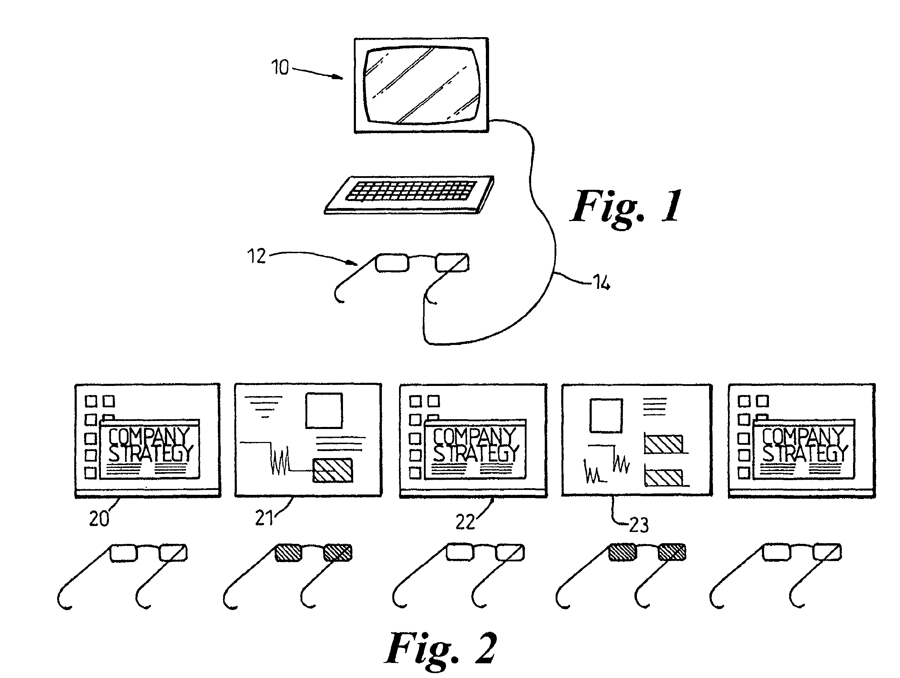

Such embodiments are illustrated in Figures 1, 2 and 3.

Figure 1 shows a display device 10, in the example a display of a personal computer. A viewer 12 is connected to display device 10; in the example of figure 1 the viewer takes the form of binocular glasses, and is connected to display 10 by a wire 14. Each ocular is formed of a liquid crystal cell which is capable of blocking vision therethrough at times when garbage data is displayed on display 10.

Other types of viewing device may equally be used, for instance a single liquid crystal cell may cover both eyes of the user. The exemplified connection between the viewing device and the display permits the viewing device to be synchronised with the display. One could use other solutions known in the art for connecting the viewing device and the display, e.g. infra-red transmission, RF transmission or the like.

The display device is driven by an electrical drive signal that represents the images to be displayed and interlaces the actual data with the garbage data. The interlacing of the actual data with the garbage data can be carried out within the personal computer to which the display is attached, either using suitable application software, or at a lower level such as within the graphics driver or graphics adaptor of the PC so that its use is transparent to the applications using the display. Moreover, the introduction of the garbage data into the display signal may even be carried out entirely with the display device itself, either by hardware or software or any combination thereof. Equally the viewer may be connected to the PC and driven by a synchronisation signal generated therein or may be connected to the display device, in this case the synchronisation signal would be generated within the display device. Many different arrangements are possible as will be well understood by those skilled in the art. The presently preferred implementation is the one where the garbage data is implemented via the graphics driver or graphics adaptor of the PC. Typically, the graphics subsystems in PCs have now a lot of memory, enough to hold two subsequent images - this is called "double/triple buffering" - to smoothen movements in animations, etc.; it is quite easy instead of two images that are almost the same, to alternate between two images that are, for instance, the "negative" one of the other, as exemplified below. This makes it especially easy to generate garbage data on images separate from the actual data.

When the garbage data is implemented within the display device, the viewer is preferably synchronised with the display device; this implementation is notably possible where there is enough computing power within the display device for generating the garbage data, and where there is provided a synchronisation output on the display.

Figure 2 shows an example of a possible sequence of images displayed in the device of figure 1, together with the corresponding state of the viewing device 12. In the example of figure 2, actual data and garbage data are displayed in separate screen images. Image 20 comprises actual data, in the example text to be displayed to the user. The next image 21 comprises garbage data; actual data is again displayed in following image 22; next image 23 comprises again garbage data. In other words, images comprising actual data and garbage data are alternating on the display. The operation of the device is the following. The viewing device 12 is synchronised with the display, so that it is blocked when garbage data is displayed. Thus, the user wearing the viewing device cannot see the display while garbage data is displayed. The viewing device is transparent when actual data is displayed. Thus, the user provided with the viewing device only sees actual data on the display. A third party not provided with the viewing device sees on the display both actual data and garbage data, and is thus prevented from seeing actual data.

The garbage data is selected so as to make the actual data unreadable to a third party not provided with the viewing device. The content of the garbage data may vary : one may use a black image as garbage data; the garbage data may also be the negative of the actual data so that a third party only sees a grey screen - the result of averaging the colors Garbage data may also be formed of randomly selected data. It will be understood that many other implementations are possible, inasmuch as the display of garbage data makes actual data unreadable to third parties.

The frequency at which garbage data and actual data are switched may vary, as well as the pattern of display. In the example of figure 2, actual and garbage data are displayed alternatively and cyclically. More specifically, the frequency at which the actual data and garbage data are alternated may be selected using one or more of the following possible constraints :
- the rate at which frames of actual data are displayed is rapid enough to ensure that the user has a fluid vision of data changes - if data is changing;
- the actual data is displayed for sufficient time to ensure a brightness required by the user;
- the display of actual data is short enough to ensure that a third party cannot read actual data;
- the garbage data is displayed for sufficient time to ensure that a third party is prevented from reading the actual data.
These constraints depend on the reading ability of the human eye and may be easily determined experimentally by having user and third parties test the display. A refresh rate of 50 to 60 Hz is generally considered acceptable in usual display devices; this rate could even be lowered to 30 to 40 Hz. If garbage data is not displayed for more than 1/20 or 1/30 s, the shutting off of the viewing device would normally not be perceived by the user. Similarly, if actual data is not displayed for more than 1/20 or 1/15 s, it would normally not be perceived by a third party. These values are of course exemplary, and different values may be selected according to the nature of actual and garbage data, and according to the type of display.

In the embodiment of figure 2, actual data and garbage data are displayed alternately. This is a simple implementation of the invention and one could also use a different cycle for displaying actual data and garbage data, e.g. two images of actual data may be displayed together with one image of garbage data in a repeated sequence of three images. One may also display actual and image data in a random order, either within a sequence including a predefined number of actual and garbage frames that fulfils one or several of the constraints discussed above. Such a randomisation would avoid the possible risk that a third party is able to synchronise an independent viewing device with the display.

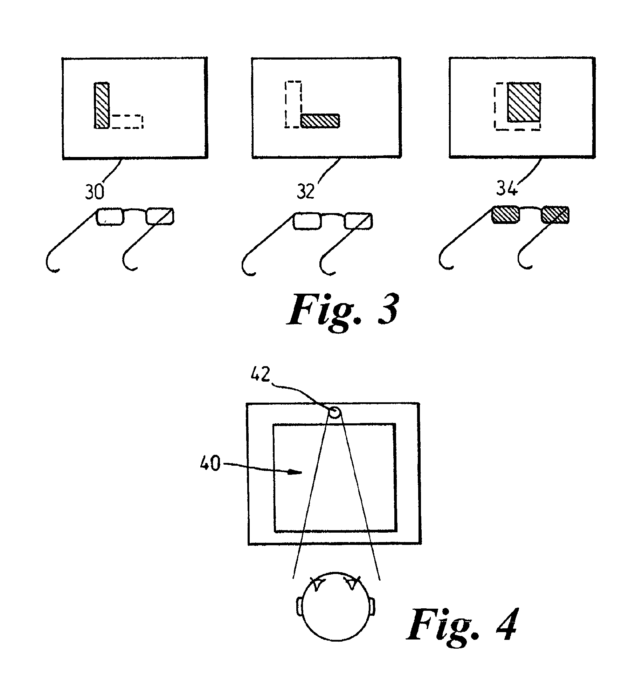

Figure 3 shows another possible image sequence displayed in the device of figure 1, together with the corresponding state of the viewing device. In the example of figure 3, actual data is displayed in separate images that combine to form a desired viewable image. Figure 3 shows the example of the display of an L-shape. In a first image 30, there is displayed the vertical branch of the L. In a second image 32, there is displayed the horizontal branch of the L. In a third image 34, there is displayed garbage data covering the space between the branches of the L. The viewing device is blocked when garbage data is displayed. For a third party, there appears on the display a black square, whereas the user would clearly see the L shape.

The embodiment of figure 3 shows that actual data may be displayed in separated images. This makes it possible to increase brightness: as compared with the arrangement of figure 2, which would create a drop of brightness of 50%, the drop of brightness in the embodiment of figure 3 is only 33%. In addition, the refreshment rate is higher in the embodiment of figure 3 than in the embodiment of figure 2. However, the embodiment of figure 3 may result in a slight decrease in contrast : the L shape may appear to the user not in black, but in a dark grey. This trade-off may notably be acceptable for text.

In the examples of figures 2 and 3, garbage data is filtered out by simply preventing the user from seeing it; the viewing device is blocked while garbage data is displayed. A more elaborate filtering process may also be used, notably where actual data and garbage data are simultaneously displayed; coloured garbage or actual data may be filtered out using a colour liquid crystal cell in the viewing device.

For instance, assume the user wishes to see actual data formed of black text over a white page. A first image is displayed, with the text in green over a red page. The glasses filter out the green colour, that is the colour of the text. A second image is then displayed, with the text in blue over a green page. The glasses again filter out the colour of the text, that is blue. A third image is displayed with a red text over a blue page. The red colour of the text is filtered out by the glasses. The user then sees a black text over a white page. A third party, without any filter sees a white display. Even if the party is provided with a filter, it will see a display having a single colour : indeed, the same colour would be filtered by the filter of the third party, be it for the text or for the page. In this example, the actual data and the garbage data are actually displayed at the same time on the display. The colour of the actual information is filtered out, so that the actual information always appears in black to the user.

In another example, one could also use different sets of colours. For instance, assume the actual data is text in white over a dark blue page; this is with R, G, B colours defined as (0, 0, 125) in a standard colour definition. The first image displayed on the screen is the text in white on a light blue page with colour defined as (0, 255, 125) in a RGB system; at this time, the glasses filter out the green colour, e.g. is a magenta filter. The user then sees a text in white over a dark blue page. The second image displayed is the text in white over a with a dark magenta defined as (255, 0, 125) in a RGB system; at this time, the glasses filter out the red colour, e.g. is a cyan filter. The user again sees again a white text over a dark blue page. A third party will see a combination of a combination of the two images, that is a white text on a white page. The text does not appear to the third party. This embodiment has the drawback that a third party having a fixed filtering viewing device would see the actual data.

These examples show that one may use elaborate filtering techniques for ensuring that the user sees the actual data, while a third party cannot see the actual data.

Figure 4 is a view of a device according to another embodiment of the invention. In the embodiment of figure 4, the display has a limited vision angle, that is controlled according to the position of the user in front of the display. The device has a display 40 with a dynamically steerable vision angle. This is achieved e.g. as in the referenced Ecomo 4D (trademark) monitor of ELSA (Germany). Thus, the wedge-like volume inside of which the user may read the information displayed on the display may move with respect to the display. The vision angle itself is constant or substantially constant : the value of this angle determines the size of the wedge-like volume inside of which the user may read the information; however, the wedge-like volume moves with respect to the display.

In addition, there is provided a sensor 42 for tracking the position of the user of the display in front of the display. Specifically, the sensor tracks the position of the eyes of the user in front of the display. The vision angle is then controlled as a function of the position of the user in front of the display : the vision angle is controlled so that the user remains inside of the vision angle - inside of the wedge-like volume - thus, the user always benefits from a correct vision. However a third party looking at the display while sitting or standing besides the user would not benefit from the correct vision angle : indeed, the third party would be outside of the vision angle, that is outside of the steerable wedge-like volume. This second embodiment again makes it possible for the user only to see the displayed information.

In this embodiment, the sensor may use any solution known per se in the art : one could use a digital or analog camera and analyse the images provided by the camera to locate the eyes or the head of the user; one could use an emitting device worn by the user, e.g. an ultrasonic emitting device or an infrared emitting device. The angle vision of the display need not be steerable in both vertical and horizontal directions. Indeed, the display may have a restricted vision angle in the vertical direction ; the user would simply - as usual nowadays for laptop computers - set the vertical orientation of the display so that the angle of vision is centred around his eyes. A third party located above the user would then be out of the preferred angle of vision, and would not see the displayed information.

A preferred value of angle of vision is about 30 degrees, for a display of 12-inch and a user standing at a distance of 60 Cm. This angles ensures that the user sees the whole screen with both eyes, and limits the ability of a third party to see the displayed information. The "ideal" angle of vision depends on the size of the display, and of the distance at which the user stands from the display. In order to keep or increase the "privacy" of the viewing, especially for large displays, the system can be improved by steering the angle of vision as a function of the horizontal position of the pixels on the screen. This way, the wedge-like volume "direction" could aim at the user's eyes, as a function of the horizontal position on the screen. The angle of the wedge can the be reduced, improving privacy while maintaining full screen readability with both eyes.

The invention is not limited to the embodiments discussed above. Both embodiments could be combined for increasing privacy. One may alternate the different types of garbage data discussed in the first embodiment.

## Claims

1. A display system comprising:
- a display device (10) for displaying images in response to a signal;
- means to generate a signal for transmission to the display, the signal being such as to cause the display device to display a sequence of images comprising actual data and garbage data; and
- a viewer (12) in the optical path between the display device and the eyes of one or more users, said viewer including a dynamic filter synchronised with said signal so as to optically filter out the garbage data from the displayed image so that the actual data is only visible to said users, whereby third parties not using the viewer cannot discern the actual data.

2. The device of claim 1, wherein an image comprises only actual data or only garbage data, and wherein the viewer is blocked when an image comprising garbage data is displayed.

3. The device of claim 1, wherein an image comprises actual data and garbage data, and wherein the viewer transmits actual data and blocks garbage data.

4. The device of one of claims 1 to 3, wherein the display of garbage data makes actual data unreadable to the human eye.

5. The device of one of claims 1 to 4, wherein images comprising actual data are displayed at a rate higher than 30 Hz.

6. The device of one of claims 1 to 5, wherein the duration of successive images comprising garbage data is less than 1/20 s.

7. The device of one of claims 1 to 6, wherein the duration of successive images comprising actual data is less than 1/15 s.

8. The device of one of claims 1 to 7, wherein the viewer carries out the same filtering for both eyes.

9. The device of claim 8, wherein the viewing device comprises at least one liquid crystal cell.

10. A device comprising
- a display (40) having a dynamically steerable vision angle;
- a sensor (42) sensing a position of a user in front of the display, said vision angle being steered according to the position of the user.

11. The device of claim 10, wherein the vision angle is less than 20°.

12. The device of claim 10 or 11, wherein the vision angle is more than 8°.

13. The device of claim 10, 11 or 12, wherein the sensor senses the position of the eyes of the user.

14. The device of claim 10, 11 or 12, wherein the sensor senses the position of the head of the user.

15. The device of one of claims 10 to 14, wherein the steerable angle of vision is the horizontal angle of vision.
